# EUROPEAN PATENT SPECIFICATION

(11) **EP 4 375 897 B1**
(45) Date of publication and mention of the grant of the patent: **23.07.2025**
(21) Application number: 23209676.8
(22) Date of filing: 14.11.2023
(51) Int. Cl.: G06Q 10/06, G06F 8/34, G06F 9/54, G06Q 10/0631, G06Q 10/10

(54) **SYSTEM FOR BUSINESS PROCESS AUTOMATION AND METHOD THEREOF**
SYSTEM ZUR GESCHÄFTSPROZESSAUTOMATISIERUNG UND VERFAHREN DAFÜR
SYSTÈME D'AUTOMATISATION DE PROCESSUS COMMERCIAL ET PROCÉDÉ ASSOCIÉ

(30) Priority: 25.11.2022 KR 20220160426; 04.05.2023 KR 20230058187
(43) Date of publication of application: 29.05.2024
(73) Proprietor: Samsung SDS Co., Ltd., Songpa-gu, Seoul (KR)
(72) Inventor: Jung, Young Sik, Seoul (KR); Cho, Moo Young, Seoul (KR); Lee, Kang Hyeok, Seoul (KR); Kim, Hyong Gook, Seoul (KR); Jang, In Yong, Seoul (KR); Choi, Chul Ho, Seoul (KR); Kim, Jeong Heon, Seoul (KR); Yoo, Ho Kyung, Seoul (KR); Lee, Yeong Ho, Seoul (KR); Cho, Kyung Ho, Seoul (KR); Hwang, Tae Jin, Seoul (KR); Yoon, Jung Hee, Seoul (KR); Kim, Hee Jong, Seoul (KR)
(74) Representative: Glawe, Delfs, Moll

(56) References cited:
- CN-A- 111 597 318
- CN-A- 114 625 901
- US-A1- 2018 321 993

## Description

### BACKGROUND

### 1. Field

The present disclosure relates to a system for business process automation and a method performed in the system thereof.

### 2. Description of the Related Art

Many companies are adopting business process automation platforms to promptly respond to diverse customer needs and changes in the external business environment, with the goal of enhancing operational efficiency. The business process automation platforms typically offer design and deployment capabilities for business processes, along with functionalities for executing business processes based on business process management (BPM) execution engines.

Meanwhile, numerous tasks that make up business processes are often handled in coordination with legacy systems, such as enterprise resource planning (ERP), and this coordination process usually takes place through application programming interfaces (APIs). Consequently, the design (or deployment) information of business processes typically includes API information related to the coordinated legacy systems.

However, this approach involves the inconvenience of having to update and redeploy the design information of business processes whenever the API information of the legacy systems changes. If these updates are delayed, errors may occur during the execution of the business processes.

US 2018/321993 A1, CN 111 597 318 A, and CN 114 625 901 A are further prior art.

### SUMMARY

The present invention is defined by the appended independent claims. Preferred embodiments are set forth in the dependent claims.

Aspects of the present disclosure provide a business process automation system and a method performed within the business process automation system, which are capable of alleviating the inconvenience of having to update business processes whenever API information of linked services changes.

Aspects of the present disclosure also provide a business process automation system and a method performed within the business process automation system, which are capable of reducing the design complexity of business processes and enhancing the convenience of business process design.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to some embodiments of the present disclosure, there is provided a system for business process automation. The system may include: a connect manager configured to register and manage application programming interface (API) information for services; a process execution engine configured to execute a target business process including a particular service task, which is a task using a particular service provided by a service module; and connect broker acquiring API information for the particular service, registered through the connect manager, during execution of the target business process in response to a request from the process execution engine, and process the particular service task by sending a request for the particular service to the service module using the acquired API information.

In some embodiments, the connect manager may manage the API information for the particular service using a management identifier (ID), the connect broker may acquire the API information for the particular service using the management ID, and the management ID of the particular service may not be changed when the API information for the particular service changes.

In some embodiments, the target business process may be executed based on information deployed to the process execution engine, and the deployed information for the target business process may include the management ID of the particular service, but not the API information for the particular service.

In some embodiments, the connect broker may receive a response for multiple items from the service module as a result of the request for the particular service, extract information regarding a preset necessary item from the received response, and transmit the extracted information to the process execution engine.

In some embodiments, the connect manager may generate and register a connect information object including the API information for the particular service, and the system may further include a process designer configured to define the particular service task based on user input received via a process design interface and generate the target business process by mapping the connect information object to the particular service task.

In some embodiments, in response to user input requesting addition of a service task, the process designer may display a list of previously registered connect information object via the process design interface, and in response to user input selecting a connect information object from the displayed list, the process designer may map the particular service task to the selected connect information object.

In some embodiments, the process designer may deploy information for the target business process to the process execution engine, and the deployed information may include mapping information between the particular service task and the connect information object, but not the API information for the particular service.

In some embodiments, the target business process may further include a user task that requires interaction with a user, and the system may further include a user interface (UI) designer configured to generate and register a UI object based on user input received via a UI design interface and a process designer configured to define the user task based on user input received via a process design interface and generate the target business process by mapping the registered UI object to the user task.

In some embodiments, the process execution engine may initiate the execution of the target business process in response to a predefined condition being satisfied, and the predefined condition may include a trigger condition set in the target business process and a condition for receiving an execution request for the target business process through an open API.

According to another embodiments of the present disclosure, there is provided a method for business process automation performed by at least one computing device. The method may include: registering application programming interface (API) information for a plurality of services; initiating an execution of a target business process including a particular service task via a process execution engine, the particular service task being a task using a particular service from the plurality of services; acquiring API information for the particular service by searching through the registered API information based on a determination that a current task is the particular service task; and processing the particular service task by sending a request for the particular service to a service module using the acquired API information.

In some embodiments, the acquiring the API information may include: retrieving the API information for the particular service from the registered API information using a management identifier (ID) mapped to the API information, and the management ID is not changed when the API information for the particular service changes.

In some embodiments, the target business process may be executed based on information deployed to the process execution engine, and the deployed information may include the management ID, but not the API information for the particular service.

In some embodiments, the method may further include: receiving a response for multiple items from the service module as a result of the request for the particular service; and extracting information regarding a preset necessary item from the received response and transmitting the extracted information to the process execution engine.

In some embodiments, the method may further include: generating and registering a connect information object including the API information for the particular service; and defining the particular service task based on user input received via a process design interface and generating the target business process by mapping the connect information object to the particular service task.

In some embodiments, the target business process may further include a user task that requires interaction with a user, and the method may further include: generating and registering a user interface (UI) object based on user input received via a UI design interface and defining the user task based on user input received via a process design interface and generating the target business process by mapping the registered UI object to the user task.

In some embodiments, the process execution engine may initiate the execution of the target business process in response to predefined condition being satisfied, and the predefined condition may include a trigger condition set in the target business process and a condition for receiving an execution request for the target business process through an open API.

According to yet another embodiments of the present disclosure, there is provided a non-transitory computer-readable recording medium storing a computer program, which, when executed by at least one processor, causes the at least one processor to perform: registering application programming interface (API) information for a plurality of services; initiating an execution of a target business process including a particular service task via a process execution engine, the particular service task being a task using a particular service from the plurality of services; acquiring API information for the particular service by searching through the registered API information based on a determination that a current task is the particular service task; and processing the particular service task by sending a request for the particular service to a relevant service module using the acquired API information.

### BRIEF DESCRIPTION OF THE DRAWINGS

The above and other aspects and features of the present disclosure will become more apparent by describing in detail example embodiments thereof with reference to the attached drawings, in which:
FIG. 1 is a block diagram illustrating the operational environment of a business process automation system according to some embodiments of the present disclosure;
FIG. 2 is a block diagram illustrating the business process automation system according to some embodiments of the present disclosure;
FIG. 3 is a flowchart illustrating a business process automation method according to some embodiments of the present disclosure;
FIG. 4 is a detailed flowchart illustrating step S31 of FIG. 3;
FIG. 5 is a schematic view illustrating S42 of FIG. 4;
FIGS. 6 and 7 are schematic views illustrating a business process generation method according to some embodiments of the present disclosure;
FIG. 8 is a flowchart illustrating a business process execution method according to some embodiments of the present disclosure;
FIG. 9 is a block diagram illustrating the business process execution method according to some embodiments of the present disclosure;
FIG. 10 is a flowchart illustrating step S85 of FIG. 8;
FIG. 11 is a block diagram for explaining the effects of the business process execution method according to some embodiments of the present disclosure;
FIG. 12 is a flowchart illustrating the business process execution method according to some embodiments of the present disclosure; and
FIG. 13 is a hardware configuration view illustrating a computing system that may implement the business process automation system according to some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Various embodiments of the present disclosure will hereinafter be described with reference to the attached drawings.

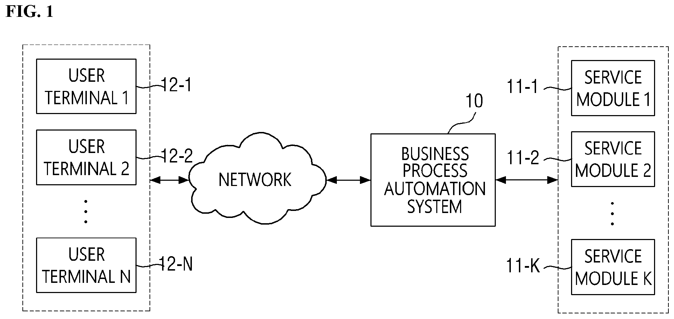

FIG. 1 is a block diagram illustrating the operational environment of a business process automation system according to some embodiments of the present disclosure.

Referring to FIG. 1, a business process automation system 10 is a computing device/system that supports the automation of business processes in an environment where one or more service modules 11-1 through 11-K and one or more user terminals 12-1 through 12-N exist. For the sake of convenience, the business process automation system 10 will be referred to as the automation system 10. Additionally, reference numeral 11 will be used to refer to an arbitrary service module from among the service modules 11-1 through 11-K or to collectively refer to all the service modules 11-1 through 11-K, and reference numeral 12 will be used to refer to an arbitrary user terminal from among the user terminals 12-1 through 12-N or to collectively refer to all the user terminals 12-1 through 12-N.

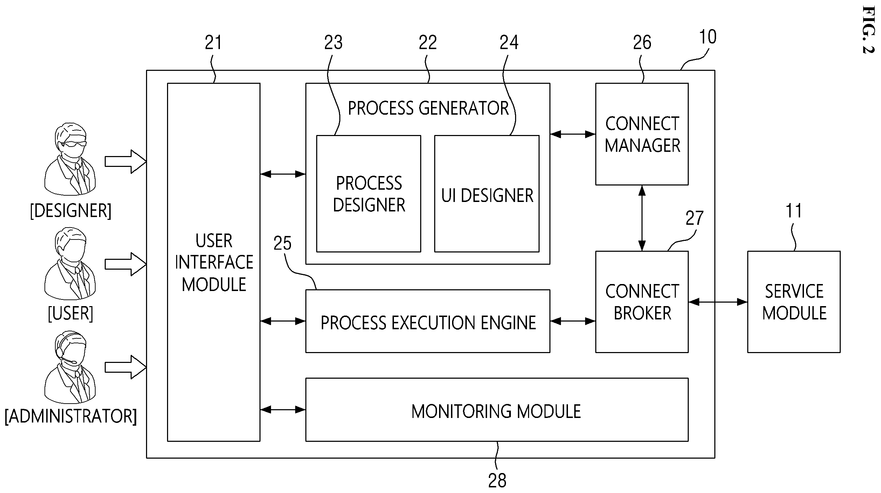

The automation system 10 may provide (or perform) various functionalities associated with business process automation. For example, the automation system 10 may offer (or perform) functions such as designing, developing, deploying, executing, and monitoring business processes. At least some of these functions may be provided (or performed) in conjunction with the user terminals 12 and/or the service modules 11. For example, the automation system 10 may provide a business process design function to users via the user terminals 12 and may also process user tasks defined in business processes while interacting with the users through the user terminals 12. Alternatively, the automation system 10 may process service tasks defined in business processes through the service modules 11. A variety of functions provided (or performed) by the automation system 10 and their specific operational mechanisms will be described later with reference to FIG. 2 and the subsequent figures.

Business processes may also be referred to as workflows, and tasks may also be referred to as activities, tasks or work, or steps. The automation system 10 may also be referred to as a workflow automation system/platform, business process management system/platform, or workflow management system/platform.

The automation system 10 may be implemented using at least one computing device. For example, all the functionalities of the automation system 10 may be implemented on a single computing device. Alternatively, first and second functionalities of the automation system 10 may be implemented on first and second computing devices, respectively. Alternatively, a specific function of the automation system 10 may be implemented across multiple computing devices.

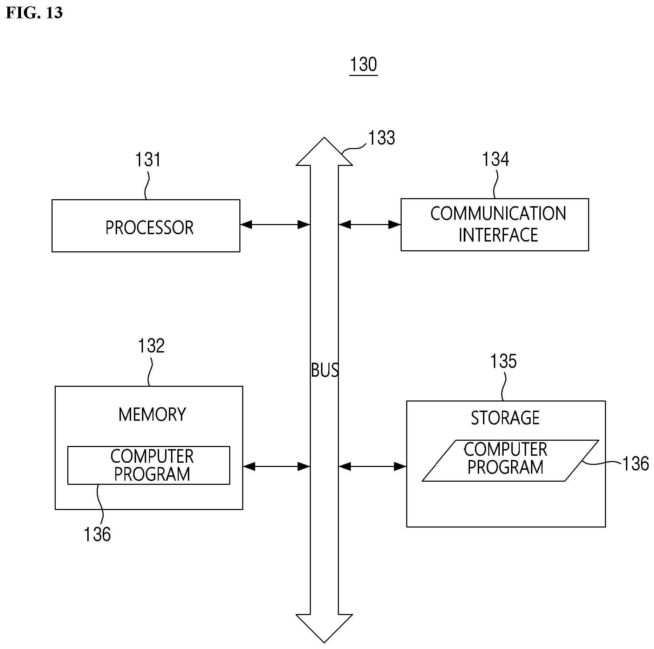

The term "computing device" encompasses any device equipped with computing capabilities. An example computing device is as illustrated in FIG. 13. A computing device, which is an assembly where various components (e.g., memories, processors, and the like) interact, may also be referred to as a computing system. Also, the term computing system may also encompass the concept of a group of multiple computing devices interacting with each other.

The service modules 11 may refer to modules that provide services in response to requests from the automation system 10. These requests may be performed based on, for example, application programming interfaces (APIs). In other words, when the automation system 10 invokes the API of a particular service, the service module 11 responsible for the particular service may provide the result of the execution of the invoked API as a response.

The service modules 11 may provide various services, including legacy services such as enterprise resource planning (ERP), customer relationship management (CRM), supply chain management (SCM), product lifecycle management (PLM), robot process automation (RPM), chatbot (or assistant) services, and cognitive services, but the present disclosure is not limited thereto. Here, the cognitive services, which are services that offer intelligence functions related to cognition (e.g., understanding, learning, analysis, etc.), may be implemented based on, for example, Artificial Intelligence (AI), but the present disclosure is not limited thereto.

The service modules 11 may also be referred to as service devices, service systems, service servers, or service providers.

The user terminals 12 may refer to user-side terminals associated with the automation system 10. The users may include, for example, designers (e.g., business process designers, UI designers, etc.), developers, individuals responsible for handling user tasks, and the administrators of the automation system 10, but the present disclosure is not limited thereto. The user terminals 12 may be implemented as any computing devices.

As illustrated in FIG. 1, the automation system 10 and the user terminals 12 may communicate through a network. Additionally, the automation system 10 and the service modules 11 may also communicate through the network. Examples of the network include nearly all types of wired/wireless networks, such as a local area network (LAN), a wide area network (WAN), a mobile radio communication network, and Wireless Broadband Internet (WiBro).

So far, the operational environment of the automation system 10 has been described with reference to FIG. 1. A detailed explanation of the configuration and operation of the automation system 10 will hereinafter be presented with reference to FIG. 2 and the subsequent figures.

FIG. 2 is a block diagram illustrating the automation system 10 in some embodiments of this disclosure.

Referring to FIG. 2, the automation system 10 may include a user interface module 21, a process generator 22, a process execution engine 25, a connect manager 26, a connect broker 27, and a monitoring module 28. However, FIG. 2 only illustrates components relevant to the embodiments of the present disclosure. Therefore, it should be noted that the automation system 10 may further include other components beyond those depicted in FIG. 2. Furthermore, the components illustrated in FIG. 2 represent functionally distinct elements. However, in actual physical implementations, multiple components may be integrated into fewer components, or particular functional elements may be further subdivided. The components of the automation system 10 will hereinafter be described.

The user interface module 21 may refer to a module that provides an interface for the users of the automation system 10, such as designers, individuals handling user tasks, and administrators. For example, the user interface module 21 may offer the users portal pages, messaging channels (e.g., messengers or email services), open APIs (e.g., APIs for requesting the creation of business process instances or initiating execution), and administrator consoles (or management pages), but the present disclosure is not limited thereto.

The process generator 22 may refer to a module that provides (or supports) functionalities for designing, developing, and deploying business processes. As illustrated, the process generator 22 may be configured to include a process designer 23 and a UI designer 24.

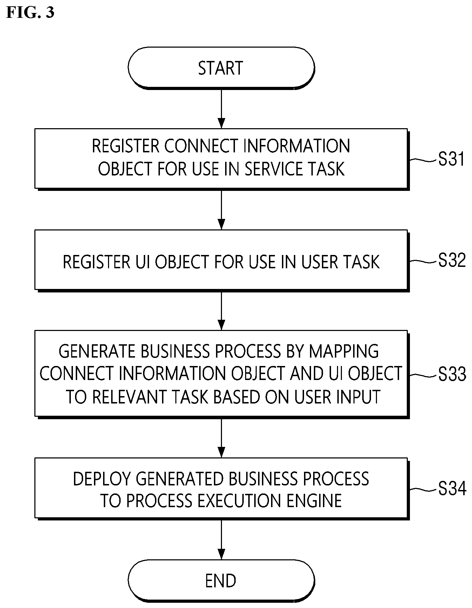

The process designer 23 may provide (or support) functionalities to the users (e.g., the designers) for designing, developing, and deploying a business process. For example, the process designer 23 may provide a graphical user interface (GUI)-based process design interface that allow the users to define and arrange elements such as service tasks, user tasks, triggers, events, conditions, and the like that constitute a business process. The users may define (or create) these elements through the process design interface and may then arrange the defined elements in any desired order (i.e., place task objects on an interface), thereby designing (or creating) a business process (or a business process model). The user may easily and swiftly design a business process by defining (or creating) tasks and mapping the tasks to previously registered connect information objects and UI objects, and this will be described later with reference to FIGS. 3 through 7.

Here, the user tasks refer to tasks that require interaction with the users, and the service tasks may refer to tasks processed in conjunction with the service modules 11.

The process designer 23 may generate code for executing a business process based on low code. For example, the process designer 23 may generate code for executing a business process from design information (e.g., Business Process Model and Notation (BPMN)-based XML design information).

Furthermore, the process designer 23 may deploy a designed business process to the process execution engine 25. For example, the process designer 23 may deploy the code and design information for the business process to the process execution engine 25, but the present disclosure is not limited thereto. Alternatively, such deployment may be automated or performed in requests from the users (e.g., the designers or developers).

The UI designer 24 may provide functionalities for designing and developing UI objects to the users (e.g., the designers). For example, the UI designer 24 may offer a GUI-based UI design interface for designing forms, and the users may design forms to be used in user tasks, through a UI design interface. The designed forms are registered as UI objects (or form objects) and may be utilized in designing a business process (e.g., user tasks), and this will be described later with reference to FIGS. 3 through 7.

The process execution engine 25 may refer to a module that executes deployed business processes. For example, the process execution engine 25 may generate business process instances and process tasks that constitute a business process, based on order and conditions.

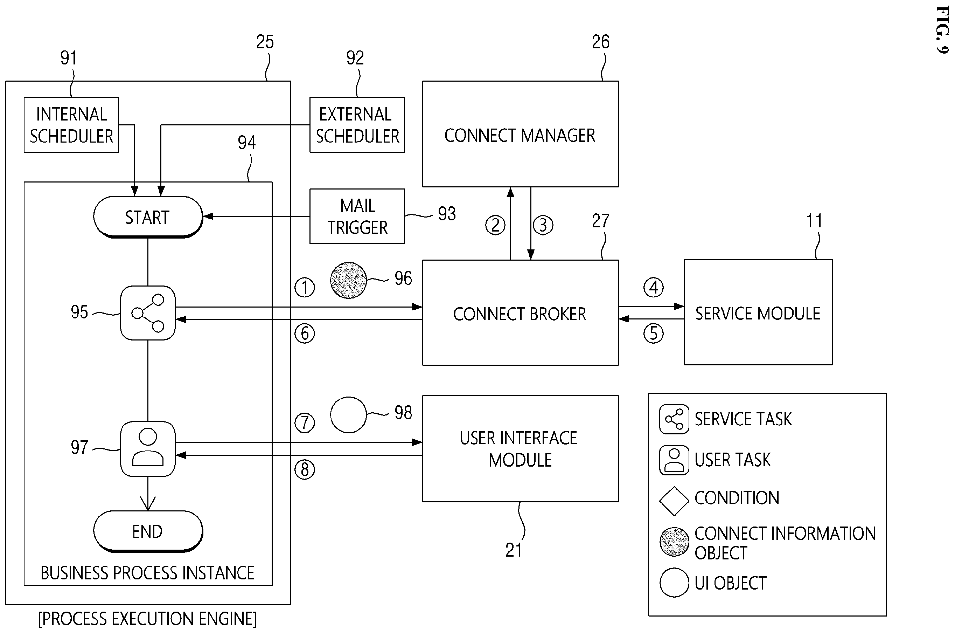

The process execution engine 25 may include a scheduler ("91" of FIG. 9) for executing business processes according to previously registered schedule information.

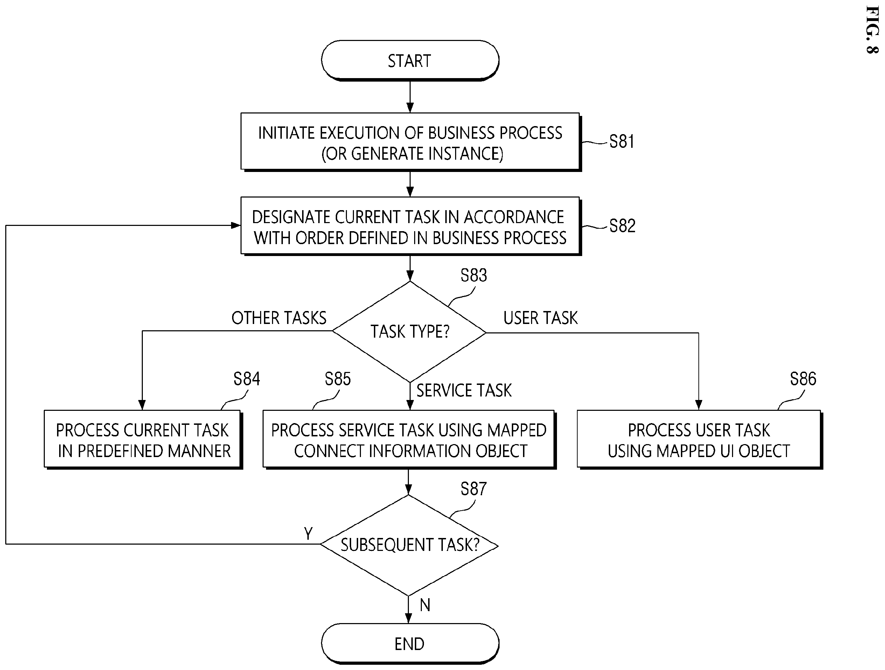

The process execution engine 25 may handle user tasks and service tasks in conjunction with the user interface module 21, the connect broker 27, etc., and this will be described later with reference to FIGS. 8 through 12. For the convenience of explanation, the process execution engine 25 will hereinafter be abbreviated as the execution engine 25.

The connect manager 26 may refer to a module that manages connect information (e.g., API information) for coordination between the automation system 10 and the service modules 11. For example, the connect manager 26 may receive and register API information for the service modules 11 to create and register connect information objects. Here, the registration of the connect information objects may involve, for example, assigning management identifiers (IDs) to the connect information objects and storing the connect information objects in a repository. As mentioned, the connect information objects may be used in designing business processes.

The API information may include API name, uniform resource locator (URL), request parameters, response items (or parameters), authentication information (e.g., IDs/passwords, tokens, etc.), and a calling method (e.g., synchronous or asynchronous), but the present disclosure is not limited thereto.

Before the registration of the API information, the connect manager 26 may validate the API information (or the connect information objects). For example, the connect manager 26 may validate the API information by sending test service requests using the API information and verifying received responses.

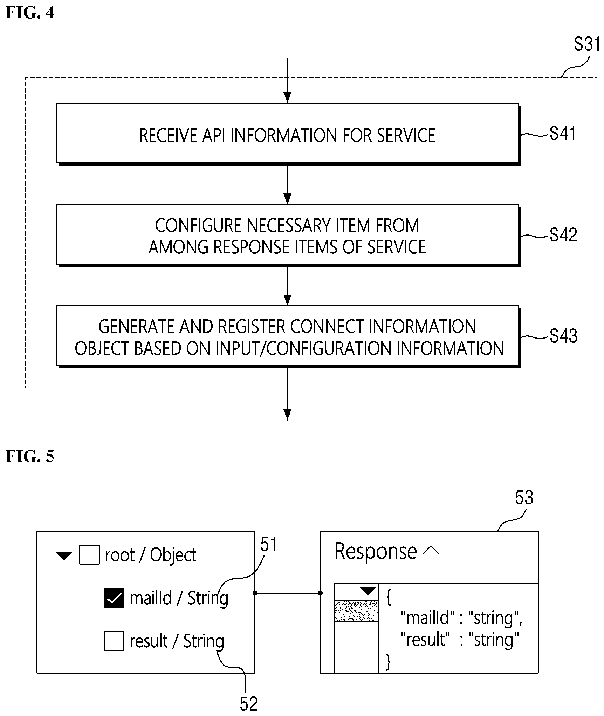

Additionally, the connect manager 26 may provide the functionality for configuring necessary items in service responses, and this will be described with reference to FIGS. 4 and 5.

The connect broker 27 may refer to a module that provides a coordination (e.g., communication) function between the automation system 10 and the service modules 11. For example, the connect broker 27 may send service requests to the service modules 11 based on APIs and receive service responses (i.e., API execution results). The connect broker 27 may be understood as a mediator module for the communication between the execution engine 25 and the service modules 11. The connect broker 27 may handle service tasks in conjunction with the execution engine 25 based on requests from the execution engine 25, and this will be described later with reference to FIGS. 8 through 12.

The monitoring module 28 may refer to a module that monitors the overall operation of the automation system 10. For example, the monitoring module 28 may monitor the execution status of business processes (e.g., process progress status, occurrence of errors, etc.), but the present disclosure is not limited thereto.

Meanwhile, although not explicitly illustrated in FIG. 2, each of the components of the automation system 10 may store various data/information in a repository (not illustrated). For example, the connect manager 26 may store connect information objects in the repository, the UI designer 24 may store UI objects in the repository, the process designer 23 may store design information and code for business processes in the repository, and the monitoring module 28 may store monitoring information (e.g., logs of business process instances) in the repository.

So far, a general description of the configuration and overall operation of the automation system 10 has been provided with reference to FIG. 2. Specific operations of the automation system 10 and various methods performed in the automation system 10 will hereinafter be described with reference to FIG. 3 and the subsequent figures.

First, a method of generating a business process according to some example embodiments of the present disclosure will hereinafter be described with reference to FIGS. 3 through 7.

FIG. 3 is a flowchart illustrating a method of generating a business process (hereinafter referred to as the business process generation method) according to some example embodiments of the present disclosure. The embodiment of FIG. 3 is merely example, and it should be understood that some steps may be added or deleted as needed. Referring to FIG. 3, steps S31 and S32 may be performed by the connect manager 26 and the UI designer 24, respectively, and steps S33 and S34 may be performed by the process designer 23. However, for the sake of explanation, it is assumed that these steps are performed by the automation system 10.

The business process generation method may begin with step S31, which involves registering a connect information object for use in a service task. Here, the connect information object may refer to a bundle of information used in coordination with the service modules 11, such as API information. The connect information object may be used to process a service task, and there may exist multiple connect information objects (e.g., information objects with different configurations of necessary items) for the same service.

The connect information object may also be referred to as a connect object/entity, a service information object, or an API information object.

Detailed processes of step S31 are as illustrated in FIG. 4 and will hereinafter be explained with reference to FIG. 4.

Referring to FIG. 4, in step S41, API information for a service may be input. For example, the connect manager 26 may receive API information for a service provided by a particular service module 11 from a user (e.g., a designer, administrator, etc.) through a registration interface, such as a GUI- or file upload-based interface (e.g., an API information input window, an interface for uploading files according to predefined formats, etc.). As mentioned, the API information may include, without limitation, API name, URL, authentication information, response items, and a calling method.

In step S42, a necessary item may be configured (set) from among the response items of the service. For example, the connect manager 26 may configure (set) a necessary item for use in a business process, from among multiple response items, based on user input. FIG. 5 illustrates an example where two response items 51 and 52 are included in an API execution result 53, and the response item 51 is configured as the necessary item.

In some embodiments, the necessary item may be automatically configured or recommended. Specifically, the connect manager 26 may automatically configure the necessary item or recommend the necessary item to the user by referencing item configuration information of similar connect information objects. In this case, the similarity between connect information objects may be determined based on factors such as API names, calling methods, and response items, but the present disclosure is not limited thereto.

Furthermore, in some embodiments, rules for transforming the format of the necessary item may be established. In such cases, the connect broker 27 may extract information regarding the necessary item from a service response, transform the extracted information in accordance with the established rules, and transmit the transformed information to the execution engine 25.

In step S43, a connect information object may be generated and registered based on input/configuration information. For example, the connect manager 26 may generate a connect information object containing input API information and necessary item configuration information, and may assigning a management ID to the connect information object. The connect manager 26 may then complete the registration of the connect information object by storing the management ID and the connect information object in the repository. The management ID may remain unchanged even if internal information of the connect information object (e.g., the received API information and the necessary item configuration information) is modified.

Referring back to FIG. 3, in step S32, a UI object for use in a user task may be registered. For example, the UI designer 24 may generate a UI object based on user input received through the UI design interface (e.g., user input related to form design). The generated UI object may be assigned a management ID, and the UI designer 24 may complete the registration of the UI object by storing the management ID and the UI object in the repository.

In step S33, a business process may be generated by mapping the connect information object and the UI object to an associated task based on user input (e.g., from a designer). For example, the process designer 23 may define (or generate) a service task based on user input received through the process design interface (e.g., user input related to task type selection, task definition, etc.), and may map a selected connect information object from among previously registered connect information objects to the service task. Alternatively, the process designer 23 may define (or generate) a user task based on user input received through the process design interface and may map a selected connect information object from among the previously registered connect information objects to the user task.

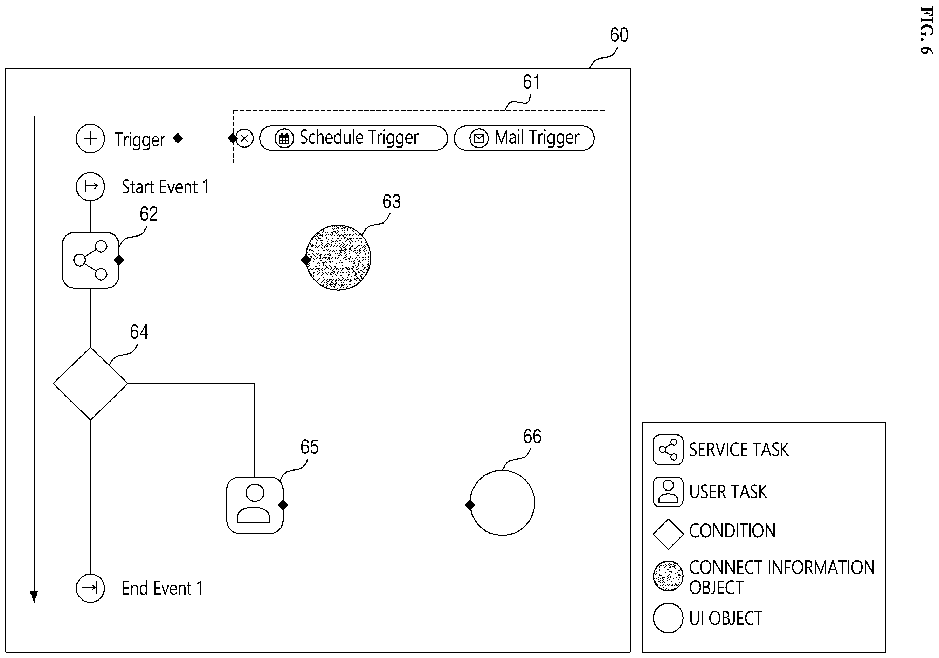

For a clearer understanding, step S33 will hereinafter be described in further detail with reference to FIG. 6.

FIG. 6 is a schematic view illustrating a process of designing a business process through a process design interface 60 according to some example embodiments of the present disclosure.

Referring to FIG. 6, the process designer 23 may support a user-friendly design functionality by arranging and connecting elements such as triggers, tasks (more precisely, task objects), and conditions in a downward direction through the process design interface 60.

Specifically, for example, in response to user input requesting a trigger setting, the process designer 23 may display a trigger list 61 and set a selected trigger (e.g., an email trigger) from the displayed list 61 as the trigger for a business process. Obviously, the process designer 23 may also receive additional information from the user, such as detailed trigger conditions (e.g., sender account, recipient account, etc.). Here, the term "trigger" may refer to an event that triggers the initiation of a business process.

Also, for example, in response to user input requesting a task addition, the process designer 23 may display a task type list. Thereafter, in response to user input selecting a task type from the task type list (i.e., user input requesting a service task addition), the process designer 23 may add a service task 62 to the business process. Then, the process designer 23 may display a previously registered connect information object list. Thereafter, the process designer 23 may map a connect information object 63 selected from the previously registered connect information object list. Obviously, the process designer 23 may also receive additional information from the user, such as information required for task definition (e.g., task name).

Also, for example, in response to user input selecting a user task from the task type list, the process designer 23 may add a user task 65 to the business process. Thereafter, the process designer 23 may display a previously registered UI object list. Thereafter, the process designer 23 may map a user object 66 selected from the previously registered UI object list to the user task 65. Obviously, the process designer 23 may also receive additional information from the user, such as information required for task definition (e.g., task name).

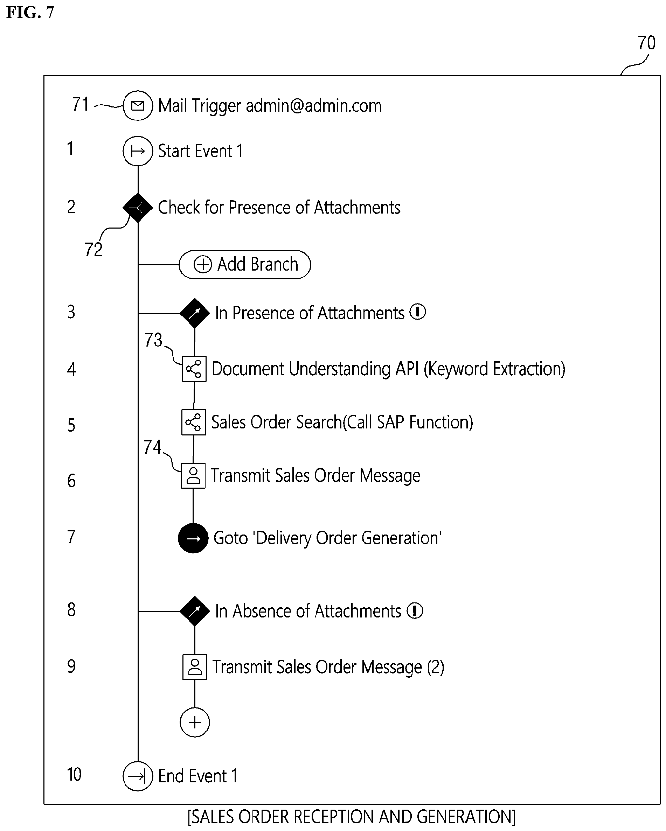

An example business process (i.e., a business process model) will hereinafter be described with reference to FIG. 7. FIG. 7 is a schematic view illustrating a sales order-related business process 70 triggered (or initiated) by the receipt of a sales order mail. Referring to FIG. 7, the business process 70 includes a mail trigger 71, a condition 72 regarding the presence of attachments, a service task 73 for extracting keywords from attachments, and a user task 74 for delivering sales order-related messages to a user.

Here, the users who registers connect information objects, UI objects, and design business processes may all be the same or different.

Referring back to FIG. 3, in step S34, the generated business process may be deployed to an execution engine. For example, the process designer 23 may generate code from design information of the business process, and deploy both the design information and the code to the execution engine 25. In this example, business process information associated with the deployed business process may only include mapping information of objects (e.g., the management IDs of mapped connect information and UI objects), but may not include the details of the objects (e.g., API information and necessary item configuration information). This approach minimizes the dependency between business process information and connect information, thereby addressing the issue of needing to update business process information whenever there are changes in API information, etc., may be addressed.

Up to this point, the business process generation method has been described with reference to FIGS. 3 through 7. In accordance with the embodiments of FIGS. 3 through 7, a business process may be generated (or designed) by mapping connect information and UI objects to relevant tasks via the process designer 23. Consequently, the convenience of business process design may be improved, and the design complexity of a business process may be reduced.

A business process execution method according to some example embodiments of the present disclosure will hereinafter be described with reference to FIGS. 8 through 12.

FIG. 8 is a flowchart illustrating a business process execution method according to some embodiments of the present disclosure. The embodiment of FIG. 8 is merely example, and it should be understood that some steps may be added or deleted as needed. Steps of the business process execution method that will hereinafter be described may be performed by the execution engine 25. However, for the sake of explanation, it is assumed that these steps are performed by the automation system 10.

Referring to FIG. 8, the business process execution method may commence with step S81, which involves initiating the execution of a previously-deployed business process. Here, the initiation of the execution of a business process may refer to Here, the commencement of execution may refer to the creation of an instance of the business process (e.g., creating an instance of the business process based on trigger conditions being satisfied) or the initiation of progress of a previously generated instance (e.g., the first task of a previously generated business process instance being performed based on trigger conditions being satisfied).

The business process targeted for execution may be referred to as a target business process.

Various conditions may initiate or trigger the execution of the business process. For example, the execution engine 25 may execute the business process in response to the receipt of a user's initiation request or in response to trigger conditions being satisfied (e.g., an email trigger, schedule trigger, etc.). Alternatively, the execution engine 25 may execute the business process when an open API requesting the execution of the business process is invoked by an external system.

Here, the schedule trigger may refer to a trigger driven by a scheduler (e.g., an internal scheduler within the execution engine 25 or an external scheduler) based on previously registered schedule information.

**In** step S82, a current task may be designated based on the sequence (or flow) defined in the business process.

**In** step S83, the type of the current task may be identified. For example, the execution engine 25 may determine whether the current task is a user task, a service task, or another type of task.

**In** step S84, if the current task is identified as another type of task other than a service task and a user task, the current task may be processed in a predefined manner. Any suitable task processing method may be used.

In step S85, if the current task is identified as a service task, the current task may be executed using a mapped connect information object. For example, referring to FIG. 9, it is assumed that the execution of a business process 94 has been initiated by an internal scheduler 91, an external scheduler 92, or an email trigger 93, and the current task is a service task 95. Then, the execution engine 25 may request the connect broker 27 to process the service task 95, as indicated by reference numeral ①. Thereafter, the connect broker 27 may process the service task 95 by coordinating with the relevant service module 11, as indicated by reference numerals ② through ⑥.

For convenience, FIG. 9 illustrates the execution engine 25 as providing the connect broker 27 with a connect information object 96 mapped to the service task 95, but the present disclosure is not limited thereto. It may be sufficient for the execution engine 25 to only provide the management ID of the connect information object 96 to the connect broker 27.

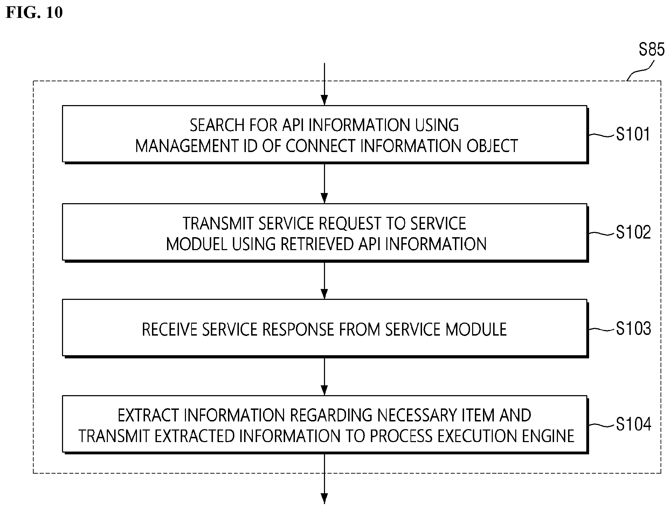

Detailed processes of step S85 performed by the connect broker 27 are as illustrated in FIG. 10 and will hereinafter be described with reference to FIG. 10.

In step S101, API information for the corresponding service may be retrieved using the management ID of the connect information object. For example, referring to FIG. 9, the connect broker 27 may search through previously registered connect information objects (or API information) using the management ID and may retrieve the API information of the connect information object mapped to the service task as a search result, as indicated by reference numerals ② and ③. The connect broker 27 may perform this retrieval process either directly on the repository or through the connect manager 26.

In step S102, a service request may be transmitted to the relevant service module 11 using the retrieved API information. For example, referring to FIG. 9, the connect broker 27 may send a service request to the relevant service module 11 using the retrieved API information, as indicated by reference numerals ④ and ⑤.

In step S103, a service response may be received from the service module 11. For example, referring to FIG. 9, the connect broker 27 may receive a service response to the sent service request from the service module 11, as indicated by reference numeral ⑤. The service response typically contains information regarding multiple items.

In step S104, information regarding a preconfigured (preset) necessary item may be extracted from the received information and may then be transmitted to the execution engine 25. For example, referring to FIG. 9, the connect broker 27 may extract only the information regarding the preconfigured (preset) necessary item from the received service response and deliver the extracted information to the execution engine 25, as indicated by reference numeral (5). Consequently, unnecessary information may be prevented from being sent to the execution engine 25 during the progress of the business process (or task).

Additionally, configuration information for the preconfigured (preset) necessary item may also be obtained by the retrieval process as performed in step S101.

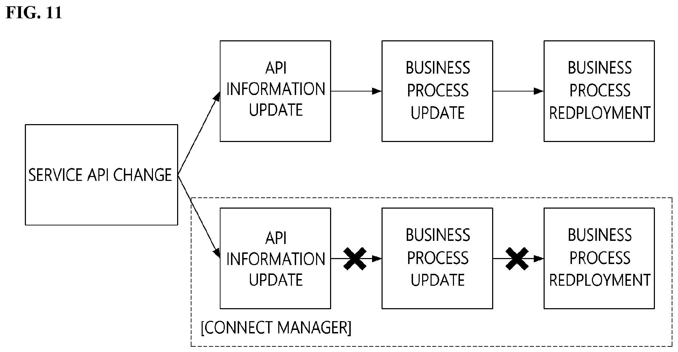

The detailed processes of step S85 have been explained with reference to FIG. 10. As mentioned, the execution engine 25 sends a service request using API information retrieved at the time of execution of a business process, rather than relying on API information included in business process deployment information. In such cases, the impact of changes to the API information of the corresponding service on the business process is minimized, resulting in significant improvements in the manageability and efficiency of the business process. For example, referring to FIG. 11, when the connect manager 26 updates existing API information to new API information, no further action is required (i.e., there is no need to redeploy business process information). Therefore, the manageability and efficiency of the business process may be greatly enhanced.

Referring back to FIG. 8, in step S86, if the current task is identified as a user task, the current task may be executed using a UI object mapped to the user task. For example, referring again to FIG. 9, when the current task is a user task 97, the execution engine 25 may process the user task 95 by using a UI object 98 mapped to the user task 97, to request the relevant user for the execution of the user task 97, as indicated by reference numerals ⑦ and ⑧. The UI object 98 may be provided to the relevant user through the user interface module 21. For example, a UI object for receiving responses from the relevant user may be provided through a messenger channel.

Specifically, when the execution engine 25 determines that the current task is a user task, the execution engine 25 may induce real-time execution of the current task by sending a predetermined notification (e.g., a notification message, a UI object mapped to the current task, etc.) to the relevant user (i.e., a task handler) through a messenger channel or the user interface module 21. In a case where multiple task handlers exist, but the current task is considered complete if processed by only one of the multiple task handlers, the execution engine 25 may send notifications to all the task handlers simultaneously. Furthermore, if one of the task handlers completes the current task first, the execution engine 25 may send the completion status of the current task (e.g., whether the current task is completed) to the remaining task handlers and deactivate the previously sent notifications. In this manner, duplication of handling the same task by task handlers may be prevented, and unnecessary messages (or transactions) may also be avoided.

For convenience, FIG. 9 illustrates the execution engine 25 as providing the UI object 98 mapped to the user task 97 to the user interface module 21, but it may be sufficient for the execution engine 25 to only provide the management IDs of the UI object 98 to the user interface module 21.

In step S87, a determination may be made regarding the existence of a subsequent (next) task within the business process. If a subsequent task exists, steps S82 through S86 may be iterated for the subsequent task. If there is no subsequent ask, the execution of the business process may be terminated.

Meanwhile, although not explicitly illustrated in FIG. 8, the execution engine 25 may perform appropriate processing based on elements other than tasks, such as conditions. For example, the execution engine 25 may make decisions based on conditions or logic.

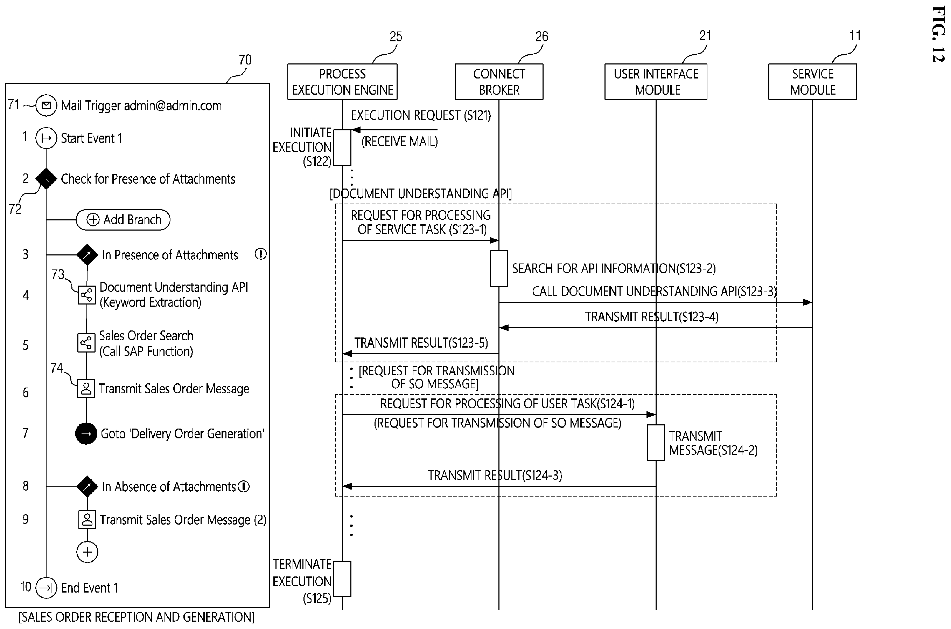

For a clearer understanding, the execution of the business process 70 of FIG. 7 will hereinafter be described with reference to FIG. 12.

Referring to FIG. 12, in steps S121 and S122, the execution engine 25 may initiate (start) the execution of the business process 70 in response to a request from the email trigger 71, and the email trigger 71 may request the execution of the business process 70 upon receiving a sales order-related email.

In steps S123-1 through S123-5, the execution engine 25 may perform the service task 73 in coordination with the relevant service module 11 to extract key words from the email's attachments. Specifically, in step S123-1, the execution engine 25 may request the handling of the service task 73 from the connect broker 26. Thereafter, in step S123-2, the connect broker 26 may retrieve API information of a connect information object mapped to the service task 73 (S123-2). Then, in step S123-3, the connect broker 26 may send a service request to the service module 11, which may be a module providing cognitive services, using the retrieved API information. For example, in step S123-3, the connect broker 26 may invoke the corresponding API. Thereafter, in S123-4 and S123-5, the connect broker 26 may receive the results of the service request (e.g., the outcomes of keyword extraction) from the service module 11 and may transmit the received results to the execution engine 25.

In steps S124-1 through S124-3, the execution engine 25 may perform the user task 74, which is the task of delivering a sales order-related message to the user (e.g., the responsible party), in coordination with the user interface module 21. For example, in steps S124-1 and S124-2, the execution engine 25 and the user interface module 21 may deliver the sales order-related message to the user using a UI object mapped to the user task 74. In the absence of mapped UI objects, the user interface module 21 may deliver the sales order-related message to the user in accordance with the method defined in the business process (e.g., through a messenger channel).

In step S125, if it is determined that there is no subsequent task, the execution engine 25 may terminate the execution of the business process 70.

The business process execution method according to some embodiments of the present disclosure has been described so far with reference to FIGS. 8 through 12. As described, the connect manager 26 separately manages API information (or connect information objects) for linked services, and the connect broker 27 may utilize API information retrieved at the runtime of a business process to process service tasks. This approach ensures that even with changes in the API information for the linked services changes, there is no need to redeploy business process information, resulting in significant enhancements in the convenience and efficiency of business process management. In other words, by separating the management of API information from the management of the business process (e.g., design, deployment, etc.), the convenience and efficiency of business process management may be greatly enhanced.

An example computing device 130 that may implement the automation system 10 will hereinafter be described with reference to FIG. 13.

FIG. 13 is a hardware configuration view of an example computing device 130.

Referring to FIG. 13, the computing device 130 may include at least one processor 131, a bus 133, a communication interface 134, a memory 132, which loads a computer program 136 executed by the processor 131, and a storage 135, which stores the computer program 136. FIG. 13 only illustrates components relevant to the embodiments of the present disclosure, and it is obvious that the computing device 130 may further include other general components other than those illustrated in FIG. 13. In other words, the computing device 130 may be configured to include various components other than those illustrated in FIG. 13 or may be configured without some of the components illustrated in FIG. 13. The components of the computing device 130 will hereinafter be described.

The processor 131 may control the overall operations of the components of the computing device 130. The processor 131 may be configured to include at least one of a central processing unit (CPU), a micro-processor unit (MPU), a micro controller unit (MCU), a graphic processing unit (GPU), a neural processing unit (NPU), and any other known form of processor in the field to which the present disclosure pertains. The processor 131 may perform computations for at least one application or program for executing operations/methods according to some embodiments of the present disclosure. The computing device 130 may be equipped with one or more processors.

The memory 132 may store various data, commands, and/or information. The memory 132 may load the computer program 136 from the storage 135 to execute the operations/methods according to some embodiments of the present disclosure. The memory 132 may be implemented as a volatile memory such as a random-access memory (RAM), but the present disclosure is not limited thereto.

The bus 133 may provide communication functionality among the components of the computing device 130. The bus 133 may be implemented in various forms, including an address bus, a data bus, and a control bus.

The communication interface 134 may support both wired and wireless Internet communication for the computing device 130. Additionally, the communication interface 134 may also support various other communication methods. For this purpose, the communication interface 134 may be configured to include a communication module that is well known in the field to which the present disclosure pertains.

The storage 135 may temporarily store at least one computer program 136. The storage 135 may be configured to include a non-volatile memory (such as a read-only memory (ROM), an erasable programmable ROM (EPROM), an electrically erasable programmable ROM (EEPROM), or a flash memory), a hard disk, a removable disk, or any other well-known computer-readable medium in the field to which the present disclosure.

The computer program 136 may include one or more instructions that, upon being loaded into the memory 132, direct the processor 131 to perform the operations/methods according to some embodiments of the present disclosure. In other words, by executing the loaded instructions, the processor 131 may perform the operations/methods according to some embodiments of the present disclosure.

For example, the computer program 136 may include instructions to perform the following operations: registering API information for a plurality of services in a repository; initiating the execution of a target business process including a particular service task, via the execution engine 25; acquiring API information for the particular service by searching through the registered API information when it is determined that a current task is the particular service task; and processing the particular service task by sending a request for the particular service to the relevant service module 11 using the acquired API information. In this example, the automation system 10 may be implemented by the computing device 130.

In some embodiments, the computing device 130 may refer to a virtual machine implemented based on cloud technology. For example, the computing device 130 may be a virtual machine operating on one or more physical servers within a server farm. In this example, at least some of the components of the computing device 130, i.e., the processor 131, the memory 132, and the storage 135, may be implemented as virtual hardware, and the communication interface 134 may be implemented as a virtual networking element such as a virtual switch.

An example computing device 130 that may implement the automation system 10 has been described so far with reference to FIG. 13.

Various embodiments of the present disclosure and their effects have been described with reference to FIGS. 1 through 13.

According to the aforementioned and other embodiments of the present disclosure, a connect manager may separately manage API information of linked services, while a connect broker may process service tasks within a business process using the API information retrieved at the time of execution of the business process (i.e., at runtime). In such cases, even if the API information of linked services changes, there is no need to redeploy the business process information (because updating the API information through the connect manager is sufficient). Accordingly, the convenience and efficiency of business process management may be greatly enhanced. In other words, by separating the management of API information from the management of business processes (e.g., design, deployment, etc.), the convenience and efficiency of business process management may be significantly improved.

Furthermore, the connect broker may extract information regarding only necessary preset items from the responses (i.e., API execution results) received from service modules and pass the extracted information to a process execution engine. In such cases, unnecessary information for the progress of a business process (or tasks) may be prevented from being inadvertently transmitted to the process execution engine.

Additionally, a process designer may support the creation (or design) of business processes by mapping connect information objects and user interface (UI) objects to relevant tasks. Consequently, the convenience of designing business processes may be improved, and the design complexity of business processes may be reduced.

However, the technical concepts of the present disclosure are not limited to the effects set forth herein, and other effects not explicitly mentioned may be readily understood by those skilled in the art to which the present disclosure, from the provided description below.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications may be made to the example embodiments without substantially departing from the principles of the present disclosure. Therefore, the disclosed example embodiments of the disclosure are used in a generic and descriptive sense only and not for purposes of limitation.

## Claims

1. A system for business process automation, the system comprising;
a connect manager (26) configured to register and manage connect information objects for coordination between the system and at least one service module (10), wherein the connect information objects comprise application programming interface, API, information for services provided by the at least one service module (10);
a process execution engine (25) configured to execute a target business process comprising a particular service task, which is a task using a particular service provided by the service module (11); and
a connect broker (27) configured to acquire the API information for the particular service, registered through the connect manager (26), during execution of the target business process in response to a request from the process execution engine (25), and process the particular service task by sending a request for the particular service to the service module (11) using the acquired API information,
wherein the connect manager (26) manages the API information for the particular service using a management identifier, ID, assigned to a connect information object mapped to the particular service,
the connect broker (27) acquires the API information for the particular service using the management ID, and
the management ID of the particular service is not changed when the API information for the particular service changes.

2. The system of claim 1, wherein
the target business process is executed based on information deployed to the process execution engine (25), and the deployed information for the target business process comprises the management ID of the particular service, but not the API information for the particular service.

3. The system of claim 1, wherein the connect broker (27) receives a response for multiple items from the service module (11) as a result of the request for the particular service, extracts information regarding a preset necessary item from the received response, and transmits the extracted information to the process execution engine (25).

4. The system of claim 1, wherein
the connect manager (26) generates and registers a connect information object comprising the API information for the particular service, and
the system further comprises a process designer (23) configured to define the particular service task based on user input received via a process design interface and generate the target business process by mapping the connect information object to the particular service task.

5. The system of claim 4, wherein
in response to user input requesting addition of a service task, the process designer (23) displays a list of previously registered connect information object via the process design interface, and
in response to user input selecting a connect information object from the displayed list, the process designer (23) maps the particular service task to the selected connect information object.

6. The system of claim 4, wherein
the process designer (23) deploys information for the target business process to the process execution engine (25), and
the deployed information comprises mapping information between the particular service task and the connect information object, but not the API information for the particular service.

7. The system of claim 1, wherein
the target business process further comprises a user task that requires interaction with a user, and
the system further comprises:
a UI designer (24) configured to generate and register a UI object based on user input received via a UI design interface; and
a process designer (23) configured to define the user task based on user input received via a process design interface and generate the target business process by mapping the registered UI object to the user task.

8. The system of claim 1, wherein
the process execution engine (25) initiates the execution of the target business process in response to a predefined condition being satisfied, and
the predefined condition comprises a trigger condition set in the target business process and a condition for receiving an execution request for the target business process through an open API.

9. A method for business process automation performed by at least one computing device, the method comprising:
registering connect information objects for coordination with at least one service module (10), wherein the connect information objects comprise API information for a plurality of services provided by the at least one service module (10);
initiating an execution of a target business process comprising a particular service task via a process execution engine (25), the particular service task being a task using a particular service from the plurality of services;
acquiring API information for the particular service by searching through the registered API information based on a determination that a current task is the particular service task; and
processing the particular service task by sending a request for the particular service to a service module (11) using the acquired API information,
wherein the acquiring the API information comprises:
retrieving the API information for the particular service from the registered API information using a management ID assigned to a connect information object mapped to the particular service, and
the management ID is not changed when the API information for the particular service changes.

10. The method of claim 9, wherein
the target business process is executed based on information deployed to the process execution engine (25), and the deployed information comprises the management ID, but not the API information for the particular service.

11. The method of claim 9, further comprising:
receiving a response for multiple items from the service module (11) as a result of the request for the particular service; and
extracting information regarding a preset necessary item from the received response and transmitting the extracted information to the process execution engine (25).

12. The method of claim 9, further comprising:
generating and registering a connect information object comprising the API information for the particular service; and
defining the particular service task based on user input received via a process design interface and generating the target business process by mapping the connect information object to the particular service task.

13. A non-transitory computer-readable recording medium storing a computer program, which, when executed by at least one processor, causes the at least one processor to perform:
registering connect information objects for coordination with at least one service module (10), wherein the connect information objects comprise API information for a plurality of services provided by the at least one service module (10);
initiating an execution of a target business process comprising a particular service task via a process execution engine (25), the particular service task being a task using a particular service from the plurality of services;
acquiring API information for the particular service by searching through the registered API information based on a determination that a current task is the particular service task; and
processing the particular service task by sending a request for the particular service to a relevant service module (11) using the acquired API information,
wherein the acquiring the API information comprises:
retrieving the API information for the particular service from the registered API information using a management ID assigned to a connect information object mapped to the particular service, and
the management ID is not changed when the API information for the particular service changes.

## Patentansprüche

1. System zur Geschäftsprozessautomatisierung, das Folgendes umfasst:
einen Verbindungsmanager (26), der dazu ausgelegt ist, Verbindungsinformationsobjekte zur Koordination zwischen dem System und mindestens einem Dienstmodul (10) zu registrieren und zu verwalten, wobei die Verbindungsinformationsobjekte
Anwendungsprogrammierschnittstellen-(API)-Informationen für Dienste umfassen, die durch das mindestens eine Dienstmodul (10) bereitgestellt werden;
eine Prozessausführungs-Engine (25), die dazu ausgelegt ist, einen Zielgeschäftsprozess auszuführen, der eine bestimmte Dienstaufgabe umfasst, die eine Aufgabe ist, die einen bestimmten Dienst verwendet, der durch das Dienstmodul (11) bereitgestellt wird; und
einen Verbindungsbroker (27), der dazu ausgelegt ist, die API-Informationen für den bestimmten Dienst, der durch den Verbindungsmanager (26) registriert ist, während der Ausführung des Zielgeschäftsprozesses als Reaktion auf eine Anforderung von der Prozessausführungs-Engine (25) zu erfassen, und die bestimmte Dienstaufgabe durch Senden einer Anforderung für den bestimmten Dienst an das Dienstmodul (11) unter Verwendung der erfassten API-Informationen zu verarbeiten, wobei der Verbindungsmanager (26) die API-Informationen für den bestimmten Dienst unter Verwendung einer Verwaltungs-Kennung (ID) verwaltet, die einem Verbindungsinformationsobjekt zugewiesen ist, das dem bestimmten Dienst zugeordnet ist,
wobei der Verbindungsbroker (27) die API-Informationen für den bestimmten Dienst unter Verwendung der Verwaltungs-ID erfasst, und
die Verwaltungs-ID des bestimmten Dienstes nicht geändert wird, wenn sich die API-Informationen für den bestimmten Dienst ändern.

2. System nach Anspruch 1, wobei
der Zielgeschäftsprozess basierend auf Informationen, die an der Prozessausführungs-Engine (25) bereitgestellt werden, ausgeführt wird, wobei die bereitgestellten Informationen für den Zielgeschäftsprozess die Verwaltungs-ID des bestimmten Dienstes, jedoch nicht die API-Informationen für den bestimmten Dienst umfassen.

3. System nach Anspruch 1, wobei der Verbindungsbroker (27) eine Antwort für mehrere Elemente von dem Dienstmodul (11) als Ergebnis der Anforderung für den bestimmten Dienst empfängt, Informationen bezüglich eines voreingestellten erforderlichen Elements aus der empfangenen Antwort extrahiert und die extrahierten Informationen an die Prozessausführungs-Engine (25) überträgt.

4. System nach Anspruch 1, wobei
der Verbindungsmanager (26) ein Verbindungsinformationsobjekt, das die API-Informationen für den bestimmten Dienst umfasst, erzeugt und registriert, und
das System ferner einen Prozessdesigner (23) umfasst, der dazu ausgelegt ist, die bestimmte Dienstaufgabe basierend auf einer Benutzereingabe zu definieren, die über eine Prozessdesign-Schnittstelle empfangen wird, und den Zielgeschäftsprozess durch Zuordnen des Verbindungsinformationsobjekts zu der bestimmten Dienstaufgabe zu erzeugen.

5. System nach Anspruch **4,** wobei
als Reaktion auf eine Benutzereingabe, die das Hinzufügen einer Dienstaufgabe anfordert, der Prozessdesigner (23) eine Liste von zuvor registrierten Verbindungsinformationsobjekten über die Prozessdesign-Schnittstelle anzeigt, und
als Reaktion darauf, dass eine Benutzereingabe ein Verbindungsinformationsobjekt aus der angezeigten Liste auswählt, der Prozessdesigner (23) die bestimmte Dienstaufgabe dem ausgewählten Verbindungsinformationsobjekt zuordnet.

6. System nach Anspruch 4, wobei
der Prozessdesigner (23) Informationen für den Zielgeschäftsprozess an die Prozessausführungs-Engine (25) bereitstellt, und
die bereitgestellten Informationen Zuordnungsinformationen zwischen der bestimmten Dienstaufgabe und dem Verbindungsinformationsobjekt, jedoch nicht die API-Informationen für den bestimmten Dienst umfassen.

7. System nach Anspruch 1, wobei
der Zielgeschäftsprozess ferner eine Benutzeraufgabe umfasst, die eine Interaktion mit einem Benutzer erfordert, und
das System ferner Folgendes umfasst:
einen UI-Designer (24), der dazu ausgelegt ist, ein UI-Objekt basierend auf einer Benutzereingabe, die über eine UI-Design-Schnittstelle empfangen wird, zu erzeugen und zu registrieren; und
einen Prozessdesigner (23), der dazu ausgelegt ist, die Benutzeraufgabe basierend auf einer Benutzereingabe, die über eine Prozessdesign-Schnittstelle empfangen wird, zu definieren und den Zielgeschäftsprozess durch Zuordnen des registrierten UI-Objekts zu der Benutzeraufgabe zu erzeugen.

8. System nach Anspruch 1, wobei
die Prozessausführungs-Engine (25) die Ausführung des Zielgeschäftsprozesses als Reaktion darauf initiiert, dass eine vordefinierte Bedingung erfüllt ist, und
die vordefinierte Bedingung eine Auslösebedingung, die in dem Zielgeschäftsprozess festgelegt ist, und eine Bedingung zum Empfangen einer Ausführungsanforderung für den Zielgeschäftsprozess über eine offene API umfasst.

9. Verfahren zur Geschäftsprozessautomatisierung, das von mindestens einer Rechenvorrichtung durchgeführt wird, wobei das Verfahren Folgendes umfasst:
Registrieren von Verbindungsinformationsobjekten zur Koordination mit mindestens einem Dienstmodul (10), wobei die Verbindungsinformationsobjekte API-Informationen für mehrere durch das mindestens eine Dienstmodul (10) bereitgestellte Dienste umfassen;
Initiieren einer Ausführung eines Zielgeschäftsprozesses, der eine bestimmte Dienstaufgabe umfasst, über eine Prozessausführungs-Engine (25), wobei die bestimmte Dienstaufgabe eine Aufgabe ist, die einen bestimmten Dienst aus der Vielzahl von Diensten verwendet;
Erfassen von API-Informationen für den bestimmten Dienst durch Durchsuchen der registrierten API-Informationen basierend auf einer Bestimmung, dass eine aktuelle Aufgabe die bestimmte Dienstaufgabe ist; und
Verarbeiten der bestimmten Dienstaufgabe durch Senden einer Anforderung für den bestimmten Dienst an ein Dienstmodul (11) unter Verwendung der erfassten API-Informationen,
wobei das Erfassen der API-Informationen Folgendes umfasst:
Abrufen der API-Informationen für den bestimmten Dienst aus den registrierten API-Informationen unter Verwendung einer Verwaltungs-ID, die einem Verbindungsinformationsobjekt zugewiesen ist, das dem bestimmten Dienst zugeordnet ist, und
wobei die Verwaltungs-ID nicht geändert wird, wenn sich die API-Informationen für den bestimmten Dienst ändern.

10. Verfahren nach Anspruch 9, wobei
der Zielgeschäftsprozess basierend auf Informationen, die an der Prozessausführungs-Engine (25) bereitgestellt werden, ausgeführt wird und die bereitgestellten Informationen die Verwaltungs-ID, jedoch nicht die API-Informationen für den bestimmten Dienst umfassen.

11. Verfahren nach Anspruch 9, das ferner Folgendes umfasst:
Empfangen einer Antwort für mehrere Elemente von dem Dienstmodul (11) als Ergebnis der Anforderung für den bestimmten Dienst; und
Extrahieren von Informationen bezüglich eines voreingestellten erforderlichen Elements aus der empfangenen Antwort und Übertragen der extrahierten Informationen an die Prozessausführungs-Engine (25).

12. Verfahren nach Anspruch 9, das ferner Folgendes umfasst:
Erzeugen und Registrieren eines Verbindungsinformationsobjekts, das die API-Informationen für den bestimmten Dienst umfasst; und
Definieren der bestimmten Dienstaufgabe basierend auf einer Benutzereingabe, die über eine Prozessdesign-Schnittstelle empfangen wird, und Erzeugen des Zielgeschäftsprozesses durch Zuordnen des Verbindungsinformationsobjekts zu der bestimmten Dienstaufgabe.

13. Nichtflüchtiges computerlesbares Aufzeichnungsmedium, das ein Computerprogramm speichert, das, wenn es von mindestens einem Prozessor ausgeführt wird, den mindestens einen Prozessor veranlasst, Folgendes durchzuführen:
Registrieren von Verbindungsinformationsobjekten zur Koordination mit mindestens einem Dienstmodul (10), wobei die Verbindungsinformationsobjekte API-Informationen für mehrere durch das mindestens eine Dienstmodul (10) bereitgestellte Dienste umfassen;
Initiieren einer Ausführung eines Zielgeschäftsprozesses, der eine bestimmte Dienstaufgabe umfasst, über eine Prozessausführungs-Engine (25), wobei die bestimmte Dienstaufgabe eine Aufgabe ist, die einen bestimmten Dienst aus der Vielzahl von Diensten verwendet;
Erfassen von API-Informationen für den bestimmten Dienst durch Durchsuchen der registrierten API-Informationen basierend auf einer Bestimmung, dass eine aktuelle Aufgabe die bestimmte Dienstaufgabe ist; und
Verarbeiten der bestimmten Dienstaufgabe durch Senden einer Anforderung für den bestimmten Dienst an ein relevantes Dienstmodul (11) unter Verwendung der erfassten API-Informationen,
wobei das Erfassen der API-Informationen Folgendes umfasst:
Abrufen der API-Informationen für den bestimmten Dienst aus den registrierten API-Informationen unter Verwendung einer Verwaltungs-ID, die einem Verbindungsinformationsobjekt zugewiesen ist, das dem bestimmten Dienst zugeordnet ist, und
wobei die Verwaltungs-ID nicht geändert wird, wenn sich die API-Informationen für den bestimmten Dienst ändern.

## Revendications

1. Système pour automatisation de processus commercial, le système comprenant :
un gestionnaire de connexion (26) configuré pour inscrire et gérer des objets d'informations de connexion pour coordination entre le système et au moins un module de service (10), dans lequel les objets d'informations de connexion comprennent des informations d'interface de programmation d'application, « Application Programming Interface » API, pour des services fournis par l'au moins un module de service (10) ;
un moteur d'exécution de processus (25) configuré pour exécuter un processus commercial cible comprenant une tâche de service particulier, qui est une tâche utilisant un service particulier fourni par le module de service (11) ; et
un courtier de connexion (27) configuré pour acquérir les informations d'API pour le service particulier, inscrites par le biais du gestionnaire de connexion (26), durant l'exécution du processus commercial cible en réponse à une demande provenant du moteur d'exécution de processus (25), et traiter la tâche de service particulier en envoyant une demande du service particulier au module de service (11) en utilisant les informations d'API acquises, dans lequel le gestionnaire de connexion (26) gère les informations d'API pour le service particulier en utilisant un identifiant, ID, de gestion attribué à un objet d'informations de connexion mis en correspondance sur le service particulier,
le courtier de connexion (27) acquiert les informations d'API pour le service particulier en utilisant l'ID de gestion, et
l'ID de gestion du service particulier n'est pas changé lorsque les informations d'API pour le service particulier changent.

2. Système de la revendication 1, dans lequel
le processus commercial cible est exécuté sur la base d'informations déployées au moteur d'exécution de processus (25), et les informations déployées pour le processus commercial cible comprennent l'ID de gestion du service particulier, et non les informations d'API pour le service particulier.

3. Système de la revendication 1, dans lequel le courtier de connexion (27) reçoit une réponse pour de multiples articles en provenance du module de service (11) en conséquence de la demande du service particulier, extrait, de la réponse reçue, des informations concernant un article nécessaire préréglé, et transmet les informations extraites au moteur d'exécution de processus (25).

4. Système de la revendication 1, dans lequel
le gestionnaire de connexion (26) génère et inscrit un objet d'informations de connexion comprenant les informations d'API pour le service particulier, et
le système comprend en outre un concepteur de processus (23) configuré pour définir la tâche de service particulier sur la base d'une entrée utilisateur reçue par l'intermédiaire d'une interface de conception de processus et générer le processus commercial cible en mettant en correspondance l'objet d'informations de connexion sur la tâche de service particulier.

5. Système de la revendication 4, dans lequel
en réponse à une entrée utilisateur demandant un ajout d'une tâche de service, le concepteur de processus (23) affiche une liste d'objets d'informations de connexion auparavant inscrit, par l'intermédiaire de l'interface de conception de processus, et
en réponse à une entrée utilisateur sélectionnant un objet d'informations de connexion à partir de la liste affichée, le concepteur de processus (23) met en correspondance la tâche de service particulier sur l'objet d'informations de connexion sélectionné.

6. Système de la revendication 4, dans lequel
le concepteur de processus (23) déploie des informations pour le processus commercial cible au moteur d'exécution de processus (25), et
les informations déployées comprennent des informations de mise en correspondance entre la tâche de service particulier et l'objet d'informations de connexion, et non les informations d'API pour le service particulier.

7. Système de la revendication 1, dans lequel
le processus commercial cible comprend en outre une tâche utilisateur qui requiert une interaction avec un utilisateur, et
le système comprend en outre :
un concepteur d'UI (24) configuré pour générer et inscrire un objet d'UI sur la base d'une entrée utilisateur reçue par l'intermédiaire d'une interface de conception d'UI ; et
un concepteur de processus (23) configuré pour définir la tâche utilisateur sur la base d'une entrée utilisateur reçue par l'intermédiaire d'une interface de conception de processus et générer le processus commercial cible en mettant en correspondance l'objet d'UI inscrit sur la tâche utilisateur.

8. Système de la revendication 1, dans lequel
le moteur d'exécution de processus (25) initialise l'exécution du processus commercial cible en réponse au fait qu'une condition prédéfinie est respectée, et
la condition prédéfinie comprend une condition de déclenchement réglée dans le processus commercial cible et une condition pour recevoir une demande d'exécution pour le processus commercial cible par le biais d'une API ouverte.

9. Procédé pour automatisation de processus commercial réalisé par au moins un dispositif informatique, le procédé comprenant :
l'inscription d'objets d'informations de connexion pour coordination avec au moins un module de service (10), dans lequel les objets d'informations de connexion comprennent des informations d'API pour une pluralité de services fournis par l'au moins un module de service (10) ;
l'initialisation d'une exécution d'un processus commercial cible comprenant une tâche de service particulier par l'intermédiaire d'un moteur d'exécution de processus (25), la tâche de service particulier étant une tâche utilisant un service particulier parmi la pluralité de services ;
l'acquisition d'informations d'API pour le service particulier en effectuant une recherche dans les informations d'API inscrites, sur la base d'une détermination qu'une tâche actuelle est la tâche de service particulier ; et
le traitement de la tâche de service particulier en envoyant une demande du service particulier à un module de service (11) en utilisant les informations d'API acquises,
dans lequel l'acquisition des informations d'API comprend :
la récupération des informations d'API pour le service particulier, des informations d'API inscrites, en utilisant un ID de gestion attribué à un objet d'informations de connexion mis en correspondance sur le service particulier, et
l'ID de gestion n'est pas changé lorsque les informations d'API pour le service particulier changent.

10. Procédé de la revendication 9, dans lequel
le processus commercial cible est exécuté sur la base d'informations déployées au moteur d'exécution de processus (25), et les informations déployées comprennent l'ID de gestion, et non les informations d'API pour le service particulier.

11. Procédé de la revendication 9, comprenant en outre :
la réception d'une réponse pour de multiples articles en provenance du module de service (11) en conséquence de la demande du service particulier ; et
l'extraction, de la réponse reçue, d'informations concernant un article nécessaire préréglé, et la transmission des informations extraites au moteur d'exécution de processus (25).

12. Procédé de la revendication 9, comprenant en outre :
la génération et l'inscription d'un objet d'informations de connexion comprenant les informations d'API pour le service particulier ; et
la définition de la tâche de service particulier sur la base d'une entrée utilisateur reçue par l'intermédiaire d'une interface de conception de processus, et la génération du processus commercial cible en mettant en correspondance l'objet d'informations de connexion sur la tâche de service particulier.

13. Support d'enregistrement non transitoire lisible par ordinateur stockant un programme d'ordinateur, qui, lorsqu'il est exécuté par au moins un processeur, amène l'au moins un processeur à réaliser :
l'inscription d'objets d'informations de connexion pour coordination avec au moins un module de service (10), dans lequel les objets d'informations de connexion comprennent des informations d'API pour une pluralité de services fournis par l'au moins un module de service (10) ;
l'initialisation d'une exécution d'un processus commercial cible comprenant une tâche de service particulier par l'intermédiaire d'un moteur d'exécution de processus (25), la tâche de service particulier étant une tâche utilisant un service particulier parmi la pluralité de services ;
l'acquisition d'informations d'API pour le service particulier en effectuant une recherche dans les informations d'API inscrites, sur la base d'une détermination qu'une tâche actuelle est la tâche de service particulier ; et
le traitement de la tâche de service particulier en envoyant une demande du service particulier à un module de service pertinent (11) en utilisant les informations d'API acquises,
dans lequel l'acquisition des informations d'API comprend :
la récupération des informations d'API pour le service particulier, des informations d'API inscrites, en utilisant un ID de gestion attribué à un objet d'informations de connexion mis en correspondance sur le service particulier, et
l'ID de gestion n'est pas changé lorsque les informations d'API pour le service particulier changent.
